# EUROPÄISCHE PATENTANMELDUNG

(11) **EP 2 637 272 A1**
(43) Veröffentlichungstag der Anmeldung: **11.09.2013**
(21) Anmeldenummer: 12158612.7
(22) Anmeldetag: 08.03.2012
(51) Int. Cl.: H02G 3/06

(54) **Verbindungsvorrichtung**

(71) Anmelder: GGK GmbH & Co. KG, 35753 Greifenstein (DE)
(72) Erfinder: Müller, Eckhard, 35781 Weilburg (DE)
(74) Vertreter: advotec.

(57) **Zusammenfassung**

Die Erfindung betrifft eine Verbindungsvorrichtung (10) für einen Hohlkanal sowie eine Hohlkanalanordnung, insbesondere Kabelkanal oder dergleichen, wobei der Kabelkanal aus rinnenförmigen Profilelementen (14) gebildet ist und wobei das Profilelement eine Bodenwandung (15) mit zwei parallelen Seitenwandungen (13) aufweist, wobei die Verbindungsvorrichtung zur Ausbildung einer Verbindung von stirnseitigen Enden zweier Profilelemente dient, wobei die Verbindungsvorrichtung zwei Klemmeinrichtungen ausbildet, wobei die Klemmeinrichtungen jeweils mit einem stirnseitigen Ende eines Profilelements verbindbar sind, wobei die Klemmeinrichtung zumindest einen Klemmabschnitt aufweist, wobei der Klemmabschnitt so ausgebildet ist, dass der Klemmabschnitt zwischen Vorsprüngen an einer Innenseite (46) der Seitenwandung, die in einer Längsrichtung des Profilelementes ausgebildet sind, einsetzbar ist, wobei dann eine Klemmkraft in dem Klemmabschnitt ausbildbar ist, derart, dass die Klemmeinrichtung an der Seitenwandung fixiert werden kann, wobei die Verbindungsvorrichtung eine Abdeckeinrichtung (38) aufweist, wobei die Abdeckeinrichtung eine Außenseite (43) der Seitenwandung zumindest teilweise abdecken kann.

## Beschreibung

Die Erfindung betrifft eine Verbindungsvorrichtung für einen Hohlkanal sowie eine Hohlkanalanordnung, insbesondere Kabelkanal oder dergleichen, wobei der Kabelkanal aus rinnenförmigen Profilelementen gebildet ist und wobei das Profilelement eine Bodenwandung mit zwei parallelen Seitenwandungen aufweist, wobei die Verbindungsvorrichtung zur Ausbildung einer Verbindung von stirnseitigen Enden zweier Profilelementen dient, wobei die Verbindungsvorrichtung zwei Klemmeinrichtunge ausbildet, wobei die Klemmeinrichtungen jeweils mit einem stirnseitigen Ende eines Profilelements verbindbar sind und wobei die Klemmeinrichtung zumindest einen Klemmabschnitt aufweist.

Aus Profilen, insbesondere Kunststoffprofilen gebildete Kabelkanäle sind hinreichend bekannt und dienen regelmäßig zur strukturierten Verlegung von Kabeln, Leitungen oder dergleichen. Derartige Kabelkanäle weisen einen U-förmigen Profilquerschnitt auf, dessen Öffnungen mit einer deckelartigen Kabelkanalabdeckung verschlossen werden. Diese Profilelemente können einen quadratischen oder rechteckigen Kabelkanal in nahezu beliebigen Profilabmessungen ausbilden. Zur Befestigung des U-förmigen Profilelements auf einem Befestigungsuntergrund, sind üblicherweise in einer Bodenwandung des U-förmigen Profilelements Durchgangsöffnungen vorgesehen, in die Befestigungselemente, wie Schrauben, eingesetzt werden können. Regelmäßig werden derartige Profilelemente in einer aufeinanderfolgenden Abfolge an beispielsweise einer Wand montiert und so eine Kabelkanalanordnung ausgebildet. Zur Verbindung der Profilelemente untereinander ist es weiter bekannt, im Bereich von sogenannten Eckumfahrungen oder bei Stoßverbindungen von Profilelementen unter einem Winkel, Verbindungsvorrichtungen zur Verbindung der Profilelemente zu verwenden. Die Verbindungsvorrichtungen sind häufig so ausgebildet, dass stirnseitige Enden der jeweils zu verbindenden Profilelemente in die Verbindungsvorrichtung eingesteckt werden und die Verbindungsvorrichtung eine Ecke eines Kabelkanals oder einen abknickenden Winkelbereich ausbildet. Dadurch wird ein Zuschnitt der Profilelemente sowie unerwünschte Spalte und Vorsprünge zwischen den stirnseitigen Enden der Profilelemente vermieden. Insgesamt erscheint so ein Kabelkanal auch optisch ansprechender.

Zur Verbindung zweier stirnseitiger Enden von Profilelementen, die relativ zueinander fluchtend bzw. entlang einer gemeinsamen Längsachse angeordnet sind, können ebenfalls Verbindungsvorrichtungen verwendet werden. Derartige Verbindungsvorrichtungen können beispielsweise laschenförmig ausgebildet sein und in die jeweiligen stirnseitigen Enden der Profilelemente so eingeschoben werden, dass sie an dem jeweiligen Ende im Profilelement geklemmt oder dort verschraubt werden. Durch diese Verbindungsvorrichtungen wird eine relativ genau fluchtende Montage der stirnseitigen Enden ermöglicht. Auch ist es bekannt, eine Kabelkanalabdeckung bzw. Profilelementabdeckung mit Versatz zu den stirnseitigen Enden, diese überdeckend an dem Kabelkanal anzuordnen, um die Profilelemente relativ zueinander auszurichten. Jedoch besteht auch hier das Problem, dass regelmäßig zwischen den stirnseitigen Enden in Folge von Ungenauigkeiten bei der Montage oder materialbedingten Längenänderungen Spalte entstehen. Diese Spalte sind insbesondere an den Seitenwandungen der Profilelemente gut sichtbar und wirken sich negativ auf das gesamte Erscheinungsbild eines Kabelkanals aus.

Der vorliegenden Erfindung liegt daher die Aufgabe zugrunde, eine Verbindungsvorrichtung zur Verbindung gerader Hohlkanalabschnitte sowie eine Hohlkanalanordnung vorzuschlagen, mit der sichtbare Spalte zwischen Profilelementen vermieden werden können.

Diese Aufgabe wird durch eine Verbindungsvorrichtung mit den Merkmalen des Anspruchs 1 und eine Hohlkanalanordnung mit den Merkmalen des Anspruchs 14 gelöst.

Bei der erfindungsgemäßen Verbindungsvorrichtung für einen Hohlkanal, insbesondere Kabelkanal oder dergleichen, ist der Kabelkanal aus rinnenförmigen Profilelementen gebildet, wobei das Profilelement eine Bodenwandung mit zwei parallelen Seitenwandungen aufweist, wobei die Verbindungsvorrichtung zur Ausbildung einer Verbindung von stirnseitigen Enden zweier Profilelemente dient, wobei die Verbindungsvorrichtung zwei Klemmeinrichtungen ausbildet, wobei die Klemmeinrichtungen jeweils mit einem stirnseitigen Ende eines Profilelements verbindbar sind, wobei die Klemmeinrichtung zumindest einen Klemmabschnitt aufweist, wobei der Klemmabschnitt so ausgebildet ist, dass der Klemmabschnitt zwischen Vorsprüngen an einer Innenseite der Seitenwandung, die in einer Längsrichtung des Profilelements ausgebildet sind, einsetzbar ist, wobei dann eine Klemmkraft in dem Klemmabschnitt ausbildbar ist, derart, dass die Klemmeinrichtung an der Seitenwandung fixiert werden kann, wobei die Verbindungsvorrichtung eine Abdeckeinrichtung aufweist, wobei die Abdeckeinrichtung eine Außenseite der Seitenwandung zumindest teilweise abdecken kann.

Folglich können die Klemmeinrichtungen in jeweils ein stirnseitiges Ende eines Profilelements eingesteckt werden, um so zwei Profilelemente miteinander zu verbinden und zu fixieren. Dabei erfolgt die Fixierung insbesondere im Bereich der Seitenwandung, da diese bei einer üblichen Befestigung der Bodenwandung auf einem Untergrund regelmäßig sichtbar ist. Im Bereich der Bodenwandung kann daher auf eine Verbindung der Profilelemente verzichtet werden. Weiter verfügt die Verbindungsvorrichtung über die Abdeckeinrichtung, die aneinander angrenzende Seitenwandungen der stirnseitigen Enden der Profilelemente abdecken kann. So wird es möglich, einen eventuellen Spalt zwischen zwei stirnseitigen Enden bzw. Seitenwandungen zu überdecken, sodass dieser dann nicht mehr sichtbar ist. Auch erleichtert eine derartige Verbindungsvorrichtung eine Montage von Profilelementen, da dann nicht mehr zwangsläufig bei der Montage auf eine genau fluchtende Anordnung der stirnseitigen Enden relativ zueinander und auf eine Anordnung auf Stoß, dass heißt ohne zwischenliegende Spalte, geachtet werden muss. Auch ist ein Ausrichten der Profilelemente relativ zueinander dann nicht mehr notwendig, da die Profilelemente mit Hilfe der Verbindungsvorrichtung ausgerichtet bzw. zusammengesteckt werden können.

Der Klemmabschnitt kann zwischen zwei Vorsprüngen und/oder einem Vorsprung und einer Bodenwandung der Seitenwandungen in das stirnseitige Ende einsetzbar sein. So kann an der Seitenwandung je nach Ausführung des Profilelements, eine Mehrzahl von in der Längsrichtung des Profilelements verlaufender Vorsprünge ausgebildet sein. Der Klemmabschnitt kann dabei zwischen zwei derartigen Vorsprüngen oder einem Vorsprung und der Bodenwandung eingesetzt bzw. verklemmt werden. Die Bodenwandung wird dann ebenfalls als ein Vorsprung der Seitenwandung genutzt. Wenn der Klemmabschnitt mehrteilig ausgebildet ist, kann dieser auch zwischen zwei Vorsprüngen und einem Vorsprung der Bodenwandung eingesetzt werden. Demnach kann der Klemmabschnitt so ausgebildet sein, dass Vorsprünge in den Seitenwandungen des Profilelements im Klemmabschnitt ausgespart sind und sich der Klemmabschnitt zwischen diesen Vorsprüngen an die Seitenwandung anschmiegt. Vorsprünge können beispielsweise Verstärkungsrippen, Montagenuten für eine Hohlkanalabdeckung oder Installationseinsätze sein.

Besonders vorteilhaft ist es, wenn der Klemmabschnitt aus zumindest einem Laschenelement gebildet ist. Ein Laschenelement ist besonders einfach ausbildbar und kann leicht zwischen Vorsprüngen eingeschoben werden. Je nach Ausbildung der Seitenwandung kann der Klemmabschnitt auch von einer Mehrzahl von Laschenelementen ausgebildet sein. Auch können die Laschenelemente dann voneinander verschiedene Längen aufweisen.

Um eine Montage der Verbindungsvorrichtung an einem Profilelement zu erleichtern, kann das Laschenelement zu einem äußeren Ende hin verjüngt ausgebildet sein. Das Laschenelement kann dann besonders einfach in ein stirnseitiges Ende bzw. in einen Bereich zwischen zwei Vorsprüngen an einer Seitenwandung eingeschoben werden.

Auch kann das Laschenelement Verstärkungsrippen aufweisen. Die Verstärkungsrippen können insbesondere in Längsrichtung des Laschenelements verlaufen. So kann das Laschenelement relativ dünn ausgeführt werden, wodurch eine Materialersparnis bei der Herstellung der Verbindungsvorrichtung erzielt werden kann. Auch können die Verstärkungsrippen zur Erzeugung einer besonders hohen Klemmkraft genutzt werden.

Weiter kann der Klemmabschnitt aus einer Mehrzahl von Laschenelementen gebildet sein, die jeweils mit der Abdeckeinrichtung über einen Steg verbunden sind. Die Abdeckeinrichtung kann demnach über Stege mit den Laschenelementen verbunden sein, wobei die Abdeckeinrichtung die Laschenelemente relativ zueinander haltert. Beispielsweise kann ein Laschenelement über zwei parallel, in Längsrichtung des Laschenelements verlaufende Stege mit der Abdeckeinrichtung verbunden sein. Auch ist es möglich, dass alle Laschenelemente untereinander über einen einzigen Steg verbunden sind, wobei der Steg dann ebenfalls mit der Abdeckeinrichtung verbunden sein kann. Vorzugsweise können die Stege bzw. der Steg an eine Dicke einer Seitenwandung angepasst sein. Wenn eine Höhe des Stegs der Dicke der Seitenwandung entspricht, kann eine Innenseite der Abdeckeinrichtung an einer Außenseite der Seitenwandung und eine Außenseite der oder des Laschenelements an einer Innenseite der Seitenwandung anliegen.

In einer Ausführungsform kann an der Verbindungseinrichtung eine Anschlageinrichtung ausgebildet sein, die ein Einschieben der Verbindungsvorrichtung in das stirnseitige Ende bzw. den Hohlkanal begrenzt. So wird es möglich, die Verbindungsvorrichtung immer bis zu der Anschlageinrichtung, die dann einen Anschlag ausbildet, in den Hohlkanal einzuschieben. Eine besondere Ausrichtung der Verbindungsvorrichtung relativ zu dem stirnseitigen Ende ist dann bei einer Montage nicht mehr erforderlich. Die Anschlageinrichtung bzw. der Anschlag kann dann an dem stirnseitigen Ende eines Profilelements zu Anlage gelangen, sodass sich die Verbindungsvorrichtung in einer für eine Montage von Profilelementen vorgesehenen Position befindet.

Die Anschlageinrichtung kann dabei zumindest aus einem Steg gebildet sein, der an dem stirnseitigen Ende eines Profilelements zur Anlage gelangen kann. Beispielsweise kann der Steg ein ohnehin vorhandener Steg sein, der ein Laschenelement mit der Abdeckeinrichtung oder anderen Laschenelementen verbindet. Der Steg kann auch so bemessen sein, dass ein definierter Spalt zwischen den stirnseitigen Enden ausbildbar wird. Weiter können auch mehrere Stege vorgesehen sein, um beispielsweise einen derartigen Spalt im Bereich von Vorsprüngen der Profilelemente zu überbrücken.

Vorteilhaft kann die Abdeckeinrichtung plattenförmig ausgebildet sein, wobei ein Abdeckabschnitt der Abdeckeinrichtung jeweils eine Seitenwandung eines Profilelements abschnittsweise vollständig abdecken kann. Eine plattenförmige Abdeckeinrichtung ist einfach ausbildbar, wobei die zwei Abdeckabschnitte jeweils die Seitenwandungen im Wesentlichen vollständig von einem Boden des Profilelements bis zu einer Profilelementabdeckung abdecken können. Vorzugsweise kann die Abdeckeinrichtung dann einen wenige Zentimeter langen Abschnitt in Längsrichtung des Profilelements abdecken.

Besonders vorteilhaft ist es, wenn die Abdeckeinrichtung an eine Außenkontur der Seitenwandung angepasst ist. Wenn an Längskanten des Profilelements Radien oder Fasen ausgebildet sind, kann die Abdeckeinrichtung der Außenkontur in diesen Bereichen folgen, sodass die Abdeckeinrichtung an die Außenkontur bzw. die Seitenwandung vollständig angeschmiegt ist.

Weiter kann zwischen der Abdeckeinrichtung und der Klemmeinrichtung eine Klemmkraft ausbildbar sein. Die Abdeckeinrichtung und die Klemmeinrichtung können so voneinander beabstandet sein, dass die Seitenwandung zwischen der Abdeckeinrichtung und der Klemmeinrichtung an diese anliegend aufgenommen werden kann. Der Abstand kann dann so gewählt sein, dass zwischen der Abdeckeinrichtung und der Klemmeinrichtung, beispielsweise über einen diese verbindenden Steg, die Klemmkraft bewirkt werden kann. So wird eine besonders sichere Befestigung der Verbindungsvorrichtung an einem Profilelement möglich, da nicht nur eine Klemmkraft zwischen Vorsprüngen bzw. einem Vorsprung und einer Bodenwandung der Seitenwandung sondern auch zwischen einer Innenfläche und einer Außenfläche der Seitenwandungen ausgebildet werden kann.

Die Verbindungsvorrichtung ist besonders einfach herstellbar und bei einer Montage verwendbar, wenn die Verbindungsvorrichtung achsensymmetrisch ausgebildet ist. So muss bei einer Montage keine Montagerichtung beachtet werden. Eine Symmetrieachse kann vorzugsweise quer zur Längsrichtung des Profilelements verlaufen.

Auch wird die Verbindungsvorrichtung besonders einfach herstellbar, wenn diese einstückig ausgebildet ist. Die Verbindungsvorrichtung kann dann als ein Kunststoffteil in einem Spritzgussverfahren hergestellt werden.

Die erfindungsgemäße Hohlkanalanordnung, insbesondere Kabelkanal oder dergleichen, umfasst zumindest zwei rinnenförmige Profilelemente und zwei Verbindungsvorrichtungen, wobei die Profilelemente jeweils eine Bodenwandung mit zwei parallelen Seitenwandungen aufweisen, wobei stirnseitige Enden der Profilelemente mit den Verbindungsvorrichtungen verbunden sind, wobei die Verbindungsvorrichtungen jeweils zwei Klemmeinrichtungen ausbilden, wobei die Klemmeinrichtungen jeweils mit einem stirnseitigen Ende eines Profilelements verbunden sind, wobei die Klemmeinrichtungen jeweils zumindest einen Klemmabschnitt aufweisen, wobei der Klemmabschnitt zwischen Vorsprüngen an Innenseiten der Seitenwandung, die in einer Längsrichtung der Profilelemente ausgebildet sind, eingesetzt und mittels einer Klemmkraft an der Seitenwandung fixiert sind, wobei die Verbindungsvorrichtung eine Abdeckeinrichtung aufweist, wobei die Abdeckeinrichtung eine Außenseite der Seitenwandung zumindest teilweise abdeckt.

Bezüglich der sich aus der Hohlkanalanordnung ergebenden Vorteile, wird auf die Vorteilsbeschreibung der erfindungsgemäßen Verbindungsvorrichtung verwiesen.

Weitere vorteilhafte Ausführungsformen der Hohlkanalanordnung ergeben sich aus den Merkmalsbeschreibungen der auf den Vorrichtungsanspruch 1 rückbezogenen Unteransprüche.

In einer besonders vorteilhaften Variante können die stirnseitigen Enden der Profilelemente mittels der Verbindungseinrichtungen voneinander beabstandet sein, sodass ein Spalt zwischen den stirnseitigen Enden ausgebildet ist, wobei der Spalt im Bereich der Seitenwandungen vollständig von den Verbindungsvorrichtungen abgedeckt ist. So können eventuelle Längenänderungen der Profilelemente kompensiert und dennoch ein optisch ansprechendes Erscheinungsbild der Hohlkanalanordnung ermöglicht werden.

Nachfolgend wird eine bevorzugte Ausführungsform der Erfindung unter Bezugnahme auf die beigefügten Zeichnungen näher erläutert.

Es zeigen:
- **Fig. 1**: Ein Profilelement mit Verbindungsvorrichtungen in einer perspektivischen Darstellung;
- **Fig. 2**: eine Hohlkanalanordnung in einer perspektivischen Darstellung;
- **Fig. 3**: eine Verbindungsvorrichtung in einer Montageposition an dem Profilelement in einer abschnittsweisen Seitenansicht;
- **Fig. 4**: eine vergrößerte Darstellung eines Verbindungsbereiches der Hohlkanalanordnung in einer perspektivischen Darstellung;
- **Fig. 5**: das Profilelement mit einer montierten Verbindungsvorrichtung in einer perspektivischen Darstellung;
- **Fig. 6**: das Verbindungselement mit der Verbindungsvorrichtung in einer weiteren perspektivischen Darstellung.

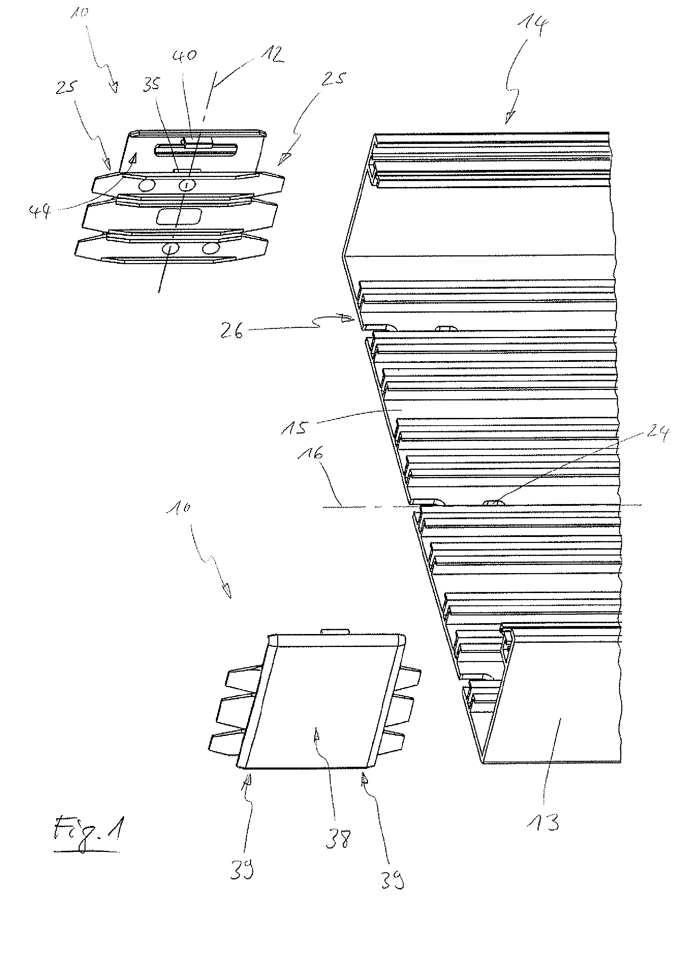

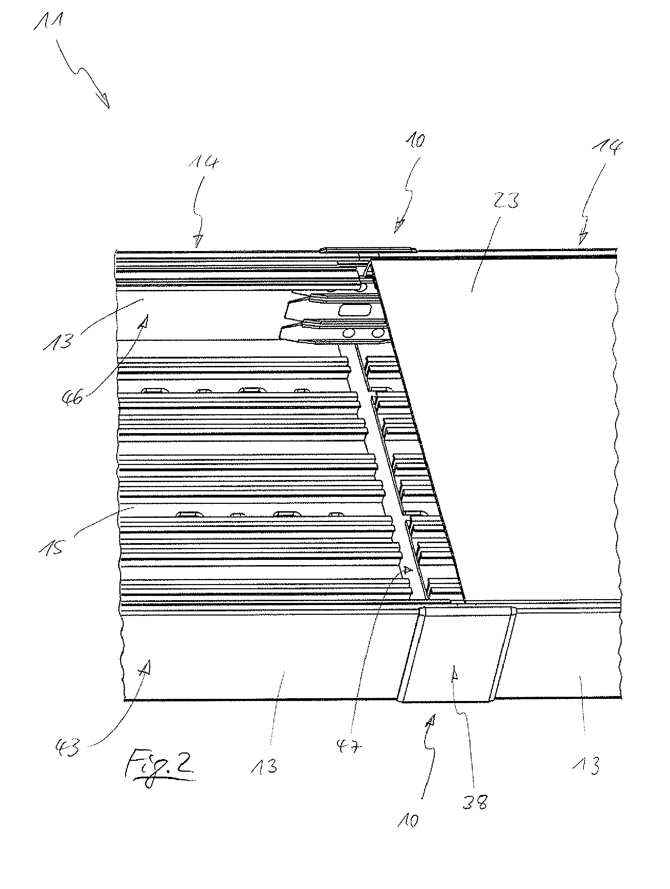

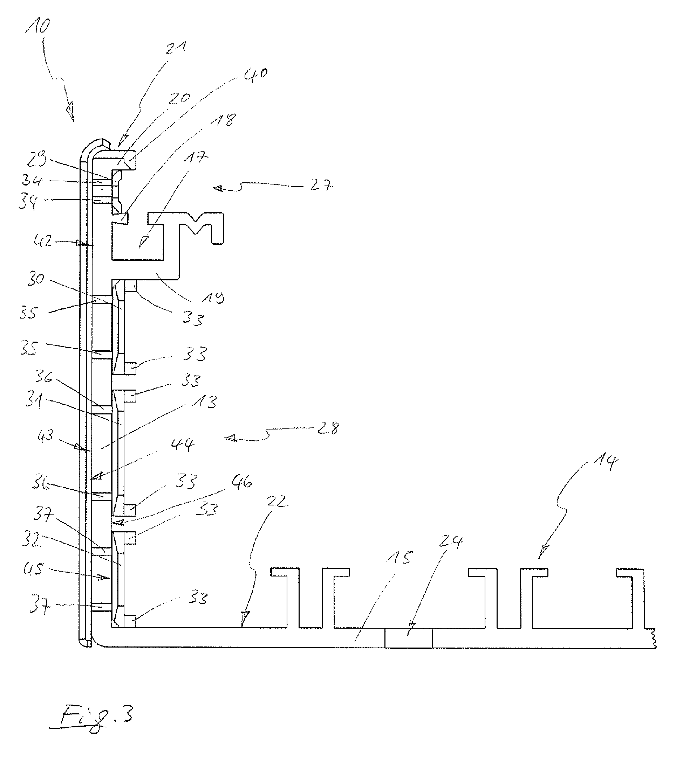

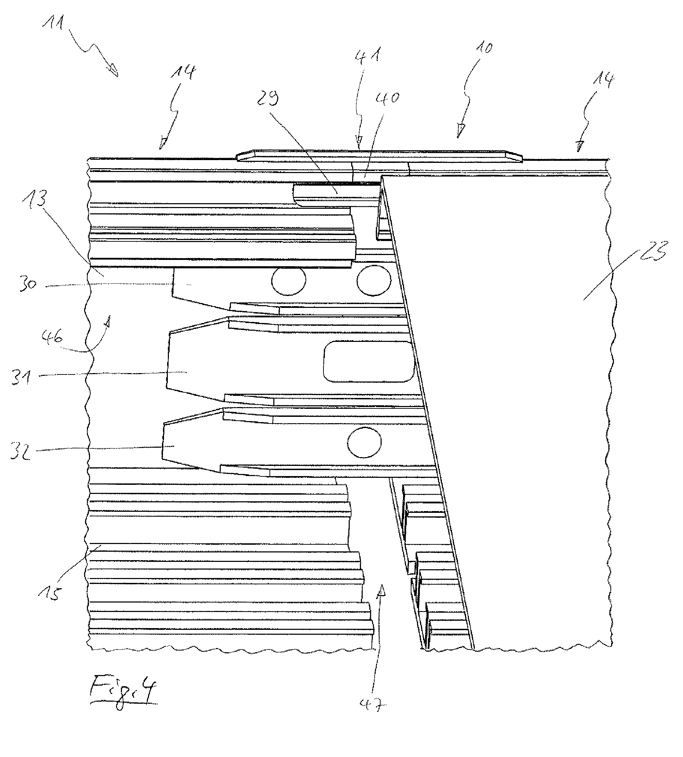

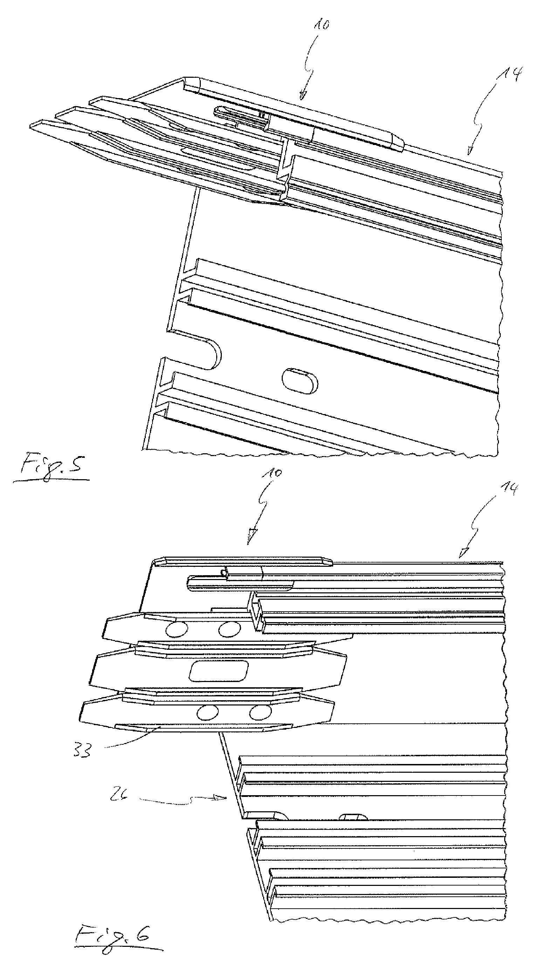

Eine Zusammenschau der **Fig. 1** bis **6** zeigt eine Verbindungsvorrichtung 10 bzw. eine Hohlkanalanordnung 11 in Teilansichten. Die Verbindungsvorrichtung 10 ist relativ zu einer Symmetrieachse 12 achsensymmetrisch als ein Kunststoffspritzgussteil ausgebildet und ist auf eine Seitenwandung 13 eines U-förmigen Profilelements 14 aufsteckbar, sodass zwei Profilelemente 14 mittels zweier Verbindungsvorrichtungen 10, wie in **Fig. 2** dargestellt, verbunden werden können.

Das Profilelement 14 ist im Wesentlichen aus den zwei parallelen Seitenwandungen 13, die über eine Bodenwandung 15 verbunden sind, gebildet. Entlang einer Längsachse 16 bzw. in Längsrichtung des Profilelements 14 verläuft an den Seitenwandungen 13 jeweils eine Montagenut 17, die aus zwei Vorsprüngen 18 und 19 ausgebildet ist. Weiter ist ein Vorsprung 20 an einem oberen Ende 21 eines Profils 22 des Profilelements 14 ausgebildet. In die Montagenut 17 kann, wie in **Fig. 2** gezeigt, eine Profilelementabdeckung 23 eingesetzt und verrastet werden. Weiter sind in der Bodenwandung 15 Durchgangsöffnungen 24 zur Befestigung des Profilelements 14 an einem hier nicht dargestellten Befestigungsuntergrund vorgesehen.

Die Verbindungsvorrichtung 10 bildet zwei Klemmeinrichtungen 25 aus, die jeweils mit einem stirnseitigen Ende 26 der Profilelemente 14 verbindbar sind. Die Klemmeinrichtung 25 weist einen oberen Klemmabschnitt 27 und einen unteren Klemmabschnitt 28 auf. Der obere Klemmabschnitt 27 ist aus einem Laschenelement 29 und der untere Klemmabschnitt 28 aus Laschenelementen 30, 31 und 32 gebildet. Die Laschenelemente 30 bis 32 weisen jeweils Verstärkungsrippen 33 auf. Weiter sind die Laschenelemente 29 bis 32 mittels Stegen 34 bis 37 an einer Abdeckeinrichtung 38 der Verbindungsvorrichtung 10 angeformt. Die Abdeckeinrichtung 38 bildet Abdeckabschnitte 39 aus, sodass die Seitenwandung 13 abschnittsweise vollständig abgedeckt wird. Die in Richtung der Längsachse 16 verlaufenden Stege 34 bis 37 sowie ein weiterer Steg 40 bilden insbesondere einen Anschlag 41 für die stirnseitigen Enden 26 an der Verbindungsvorrichtung 10 aus. Die Abdeckeinrichtung 38 ist beidseitig plattenförmig ausgebildet und einer Kontur 42 bzw. einer Außenseite 43 der Seitenwandung 13 angepasst. Eine Klemmkraft zur festen Fixierung der Verbindungsvorrichtung 10 am Profilelement 14 wird dadurch erzeugt, dass das Laschenelement 29 zwischen den Vorsprüngen 18 und 20 sowie die Laschenelemente 30 und 32 zwischen dem Vorsprung 19 und der Bodenwandung 15 verspannt werden. Diese Klemmkraft wirkt in einer vertikalen Richtung relativ zum Profil 22. Weiter ist eine Höhe der Stege 34 bis 37 so gewählt, sodass diese im Wesentlichen einem Abstand einer Innenseite 44 des Abdeckabschnitts 39 und einer Außenseite 45 der Laschenelemente 29 bis 32 in etwa entspricht, sodass zwischen der Außenseite 43 und der Innenseite 44 eine Klemmkraft erzeugt werden kann. Diese Klemmkraft wirkt im Wesentlichen in einer horizontalen Richtung relativ zum Profil 22. Folglich liegen die Laschenelemente 29 bis 32 dicht an einer Innenseite 46 der Seitenwandung 13 an.

Entsprechend der Ausbildung des Anschlags 41 weist die Hohlkanalanordnung 11 zwischen den Profilelementen 14 einen Spalt 47 auf, der an den Außenseiten 43 vollständig von den Verbindungsvorrichtungen 10 bzw. den Abdeckeinrichtungen 38 überspannt wird, sodass der Spalt 47, wie aus **Fig. 2** ersichtlich, in einer Außenansicht der Hohlkanalanordnung 11 mit montierten Profilelementabdeckungen 23 nicht sichtbar ist.

## Patentansprüche

1. Verbindungsvorrichtung (10) für einen Hohlkanal, insbesondere Kabelkanal oder dergleichen, wobei der Kabelkanal aus rinnenförmigen Profilelementen (14) gebildet ist, und wobei das Profilelement eine Bodenwandung (15) mit zwei parallelen Seitenwandungen (13) aufweist, wobei die Verbindungsvorrichtung zur Ausbildung einer Verbindung von stirnseitigen Enden (26) zweier Profilelemente dient, wobei die Verbindungsvorrichtung zwei Klemmeinrichtungen (25) ausbildet, wobei die Klemmeinrichtungen jeweils mit einem stirnseitigen Ende eines Profilelements verbindbar sind, wobei die Klemmeinrichtung zumindest einen Klemmabschnitt (27, 28) aufweist,
**dadurch gekennzeichnet,**
**dass** der Klemmabschnitt so ausgebildet ist, dass der Klemmabschnitt zwischen Vorsprüngen (15, 18, 19, 20) an einer Innenseite (46) der Seitenwandung, die in einer Längsrichtung des Profilelements ausgebildet sind, einsetzbar ist, wobei dann eine Klemmkraft in dem Klemmabschnitt ausbildbar ist, derart, dass die Klemmeinrichtung an der Seitenwandung fixiert werden kann, wobei die Verbindungsvorrichtung eine Abdeckeinrichtung aufweist, wobei die Abdeckeinrichtung (38) eine Außenseite (43) der Seitenwandung zumindest teilweise abdecken kann.

2. Verbindungsvorrichtung nach Anspruch 1,
**dadurch gekennzeichnet,**
**dass** der Klemmabschnitt (27, 28) zwischen zwei Vorsprüngen (18, 20) und/oder einem Vorsprung (19) und einer Bodenwandung (15) der Seitenwandung (13) einsetzbar ist.

3. Verbindungsvorrichtung nach Anspruch 1 oder 2,
**dadurch gekennzeichnet,**
**dass** der Klemmabschnitt (27, 28) aus zumindest einem Laschenelement (29, 30, 31, 32) gebildet ist.

4. Verbindungsvorrichtung nach Anspruch 3,
**dadurch gekennzeichnet,**
**dass** das Laschenelement (29, 30, 31, 32) zu einem äußeren Ende hin verjüngt ausgebildet ist.

5. Verbindungsvorrichtung nach Anspruch 3 oder 4,
**dadurch gekennzeichnet,**
**dass** das Laschenelement (30, 31, 32) Verstärkungsrippen (33) aufweist.

6. Verbindungsvorrichtung nach einem der Ansprüche 3 bis 5,
**dadurch gekennzeichnet,**
**dass** der Klemmabschnitt (28) aus einer Mehrzahl von Laschenelementen (30, 31, 32) gebildet ist, die jeweils mit der Abdeckeinrichtung (28) über einen Steg (35, 36, 37) verbunden sind.

7. Verbindungsvorrichtung nach einem der vorangehenden Ansprüche,
**dadurch gekennzeichnet,**
**dass** an der Verbindungsvorrichtung (10) eine Anschlageinrichtung (41) ausgebildet ist, die ein Einschieben der Verbindungsvorrichtung in das stirnseitige Ende (26) begrenzt.

8. Verbindungsvorrichtung nach Anspruch 7,
**dadurch gekennzeichnet,**
**dass** die Anschlageinrichtung (41) aus zumindest einem Steg (34, 35, 36, 37, 40) gebildet ist, der an dem stirnseitigen Ende (26) zur Anlage gelangen kann.

9. Verbindungsvorrichtung nach einem der vorangehenden Ansprüche,
**dadurch gekennzeichnet,**
**dass** die Abdeckeinrichtung (38) plattenförmig ausgebildet ist, wobei ein Abdeckabschnitt (39) der Abdeckeinrichtung jeweils eine Seitenwandung (13) eines Profilelements (14) abschnittsweise vollständig abdecken kann.

10. Verbindungsvorrichtung nach einem der vorangehenden Ansprüche,
**dadurch gekennzeichnet,**
**dass** die Abdeckeinrichtung (38) einer Außenkontur (42) der Seitenwandung (13) angepasst ist.

11. Verbindungsvorrichtung nach einem der vorangehenden Ansprüche,
**dadurch gekennzeichnet,**
**dass** zwischen der Abdeckeinrichtung (38) und der Klemmeinrichtung (25) eine Klemmkraft ausbildbar ist.

12. Verbindungsvorrichtung nach einem der vorangehenden Ansprüche,
**dadurch gekennzeichnet,**
**dass** die Verbindungsvorrichtung (10) achsensymmetrisch ausgebildet ist.

13. Verbindungsvorrichtung nach einem der vorangehenden Ansprüche,
**dadurch gekennzeichnet,**
**dass** die Verbindungsvorrichtung (10) einstückig ausgebildet ist.

14. Hohlkanalanordnung (11), insbesondere Kabelkanal oder dergleichen, mit zumindest zwei rinnenförmigen Profilelementen (14) und zwei Verbindungsvorrichtungen (10), wobei die Profilelemente jeweils eine Bodenwandung (15) mit zwei parallelen Seitenwandungen (13) aufweisen, wobei stirnseitige Enden (26) der Profilelemente mit den Verbindungsvorrichtungen verbunden sind, wobei die Verbindungsvorrichtungen jeweils zwei Klemmeinrichtungen (25) ausbilden, wobei die Klemmeinrichtungen jeweils mit einem stirnseitigen Ende eines Profilelements verbunden sind, wobei die Klemmeinrichtungen jeweils zumindest einen Klemmabschnitt (27, 28) aufweisen,
**dadurch gekennzeichnet,**
**dass** der Klemmabschnitt zwischen Vorsprüngen (15, 18, 19, 20) an Innenseiten (46) der Seitenwandungen, die in einer Längsrichtung der Profilelemente ausgebildet sind, eingesetzt, und mittels einer Klemmkraft an der Seitenwandung fixiert ist, wobei die Verbindungsvorrichtung eine Abdeckeinrichtung (38) aufweist, wobei die Abdeckeinrichtung eine Außenseite (43) der Seitenwandung zumindest teilweise abdeckt.

15. Hohlkanalanordnung nach Anspruch 14,
**dadurch gekennzeichnet,**
**dass** stirnseitige Enden (26) der Profilelemente (14) mittels der Verbindungsvorrichtungen voneinander beabstandet sind, so dass ein Spalt (47) zwischen den Enden ausgebildet ist, wobei der Spalt im Bereich der Seitenwandungen (13) vollständig von den Verbindungsvorrichtungen (10) abgedeckt ist.
